# EUROPÄISCHE PATENTSCHRIFT

(11) **EP 2 701 996 B1**
(45) Veröffentlichungstag und Bekanntmachung des Hinweises auf die Patenterteilung: **09.09.2015**
(21) Anmeldenummer: 12717668.3
(22) Anmeldetag: 25.04.2012
(51) Int. Cl.: B65G 15/62

(54) **FÖRDERBANDEINRICHTUNG**
CONVEYOR BELT DEVICE
DISPOSITIF À BANDE DE TRANSPORT

(30) Priorität: 29.04.2011 EP 11164321
(43) Veröffentlichungstag der Anmeldung: 05.03.2014
(73) Patentinhaber: Mettler-Toledo Garvens GmbH, 31180 Giesen (DE)
(72) Erfinder: KLIEFOTH, Rüdiger, 30925 Ronnenberg (DE)
(74) Vertreter: Mettler-Toledo
(86) Internationale Anmeldenummer: PCT/EP2012/057509
(87) Internationale Veröffentlichungsnummer: WO 2012/146593

(56) Entgegenhaltungen:
- EP-A1- 1 281 941
- SU-A1- 1 461 708

## Beschreibung

Die vorliegende Erfindung betrifft eine Fördereinrichtung, insbesondere eine Förderbandeinrichtung, mit einem Bandkörper, an welchem an den in Förderrichtung und entgegen der Förderrichtung sich befindenden Enden jeweils mindestens eine Förderrolle angeordnet ist und die Förderbandeinrichtung mit einem über den Bandkörper und die Rollen beweglich angeordneten Förderband versehen ist.

Solche Einrichtungen zum Fördern von Waren oder Produkten kommen bevorzugt dann zum Einsatz, wenn es gilt, Waren einer Einrichtung zur deren Inspektion zuzuführen. Dabei kann es sich um eine Wägeeinrichtung zum dynamischen Verwiegen der jeweiligen Ware handeln oder um eine Einrichtung zum Erkennen von Metallverunreinigungen in den Produkten oder eine Röntgeneinrichtung zum Erkennen verschiedener Verunreinigungen innerhalb der Produkte und dergleichen mehr. Bei den Produkten handelt es sich dabei bevorzugt um verpackte Waren aus der Lebensmittel- oder Pharmaindustrie, vorzugsweise um verpackte pulverförmige oder feinkörnige Güter.

Bei einem genannten Förderband kann es sich zum Beispiel um ein Zufuhrband, ein Abführband oder um ein über eine dynamische Wägereinrichtung bewegtes Wägeförderband handeln; auch sind Förderbänder, die die Produkte einer Inspektionseinrichtung für die Erkennung von Verunreinigungen zuführen, hier in die Betrachtung mit einzubeziehen. Häufig ist ein Förderband als sogenanntes Endlosband, das heisst ein in sich geschlossenes Band, ausgestaltet, das über mindestens zwei Förderrollen geführt ist, namentlich eine passive Laufrolle und eine Antriebsrolle, die mit einem Antrieb verbunden ist zum aktiven Antrieb des Förderbandes.

Als Beispiel für zu fördernde Waren oder zu fördernde Produkte seien hier Packungen mit einem pulverförmigen oder körnigen Inhalt, insbesondere Zucker, angeführt. Der Zucker ist in den für den Verkauf im Einzelhandel bestimmten Gebinden mit einem vordefinierten Gewichtswert - beispielsweise 1 Kilogramm - vorzugsweise in Papierverpackungen abgepackt. Diese Papierverpackungen sind in der Regel gefaltete und an den Verschlussstellen verklebte Tüten, die den Inhalt als Paket fest umschliessen. Erfahrungsgemäss sind diese Papierverpackungen nicht vollständig dicht und im Verlauf des Transports ist damit zu rechnen, dass immer wieder gewisse kleinere Mengen an Zuckerkörnern aus den Papierverpackungen rieseln können und auf dem jeweiligen Transportmittel zu liegen kommen. Diese lose auf einem Förderband liegenden Zuckerkörner können jedoch enormen Schaden anrichten, wenn sie in die beweglichen Teile der entsprechenden Förderbandeinrichtung gelangen.

Das Problem des sich auf dem Förderband befindlichen Pulvers oder feinkörnigen Materials besteht darin, dass diese Materialien durch die schnelle Bewegung des Förderbandes leicht verteilt werden und somit auch unter das Förderband geraten können - zum Beispiel auf die Innenseite eines obengenannten Endlosbandes -, sich dort aufreiben und letztendlich in die Lager der an den jeweiligen Enden befindlichen Förderrollen gelangen können. Dort können sie durch Erhitzen, Verdichten und Verkleben etc. hohen Schaden anrichten, der zu einem häufigen Auswechseln der jeweiligen Bauelemente der Förderbandeinrichtung führt.

Durch die offene Bauform der bekannten Förderbandeinrichtungen besteht ausserdem die Gefahr dass das Fördergut in die Antriebseinrichtung gelangen kann. Diese Gefahr besteht vor allem dann, wenn es sich um einen Riemenantrieb handelt, der in der Regel einen über zwei Scheiben geführten Riemen, sei dies ein Zahnriemen, ein Keilriemen oder dergleichen, aufweist. Das Pulver oder feinkörnige Material kann vom Riemen auf die Scheiben transportiert werden, sich dort verdichten und ablagern. Dies führt zu einem Materialaufbau am Umfang der Scheibe und dadurch zu einer höheren Spannung und entsprechenden Dehnung des Riemens, und letztendlich zu dessen Reissen. Der Ausfall eines Riemens, beziehungsweise die benötigte Zeit für dessen Ersetzen, bedeutet dann auch entsprechende Ausfallzeiten für die jeweiligen Anlagen.

Im Stand der Technik wird diesem Problem häufig damit begegnet, dass die Gebinde anstatt auf einem Förderband auf Förderriemen transportiert werden, wobei unterhalb der Förderriemen eine Auffangwanne angeordnet ist, in welcher das aus den Gebinden rieselnde Material aufgefangen wird. Damit ist jedoch nicht gewährleistet, dass die sich weitestgehend offen präsentierenden Lager nicht doch vom betreffenden Material erreicht werden. Ausserdem besteht die Gefahr von Vibrationen der Riemen, die sich insbesondere dann, wenn die Fördereinrichtung bei hohen Geschwindigkeiten betrieben werden soll, zu einer Laufunruhe führen, was sich in einer Ungenauigkeit der Messungen, beispielsweise beim dynamischen Verwiegen der Produkte bemerkbar macht.

Eine andere Lösung wird in der DE 10 2006 048 251 A1 vorgeschlagen, wobei die jeweiligen Fördergurte oder Förderbänder passgenau auf beiden Seiten in einer Führungswanne geführt werden. Somit soll das Einfallen von kleinem Fördergut, welches unter den Gurtlauf gelangen könnte, vermieden werden.

Eine weitere Lösung ist in der EP1 281 941 A1 offenbart, bei der eine Fördereinrichtung zum Wägen beschrieben wird. Ein Endlosband ist über Rollen geführt, wobei dieses Förderband breiter als die Länge der Rollen ausgeführt ist. An den Seitenrandabschnitten auf beiden Seiten des Förderbandes ist dieses nach unten, beziehungsweise nach innen in Bezug auf ein als Endlosband ausgestaltetes Förderband, vorstehend ausgestaltet. Diese vorstehenden Randabschnitte sind mit gegenüberliegenden Enden der Rollen im Eingriff. Ferner sind seitlich neben gegenüberliegenden Enden der Rollen Platten positioniert und bilden mit weiteren unterhalb des Förderbandes angeordneten Platten eine Art Bandkörper zur Stützung des Förderbandes. Die äusseren Platten weisen jeweils einen Absatz auf, mit welchem die vorstehend ausgebildeten, in ihrer Dicke verstärkten Seitenrandabschnitte des Förderbandes ebenfalls im Eingriff sind. Auf diese Weise besitzt das Förderband eine Zwangsführung und Förderbandschwankungen sind ausgeschlossen. Das Dokument EP 1 281 941 A1 offenbart eine Förderbandeinrichtung nach dem Oberbegriff des Anspruchs 1.

Aufgabe der Erfindung ist es, die durch aus zu transportierenden Gebinden rieselndes pulverförmiges oder feinkörniges Material verursachte Störungsanfälligkeit einer Fördereinrichtung, insbesondere einer Fördererbandeinrichtung - auch ohne Zwangsführung - nachhaltig zu verbessern, um somit Ausfallzeiten der Anlage zu verhindern.

Diese Aufgabe wird gelöst durch eine Förderbandeinrichtung nach Anspruch 1.

Dies bedeutet, dass die Aussenkanten des Förderbandes und der Bandkörper dichtend zueinander angeordnet sind. Die Dichtwirkung wird über die gesamte Umlauflänge des Förderbandes über den Bandkörper erzielt, sowohl an der Unterseite als auch an der Oberseite des Bandkörpers.

Die Aussenkanten des Förderbandes sind dabei mindestens einen einem maximalen Schwankungshub einer lateralen Förderbandschwankung entsprechenden Abstand von den Kanten des Bandkörpers entfernt.

Unter dem Begriff Schwankungshub soll in diesem Zusammenhang die Ausdehnung einer lateralen Bewegung des Förderbandes in Richtung senkrecht zur Förderrichtung verstanden werden. Im Falle einer harmonischen Förderbandschwankung wäre hier die doppelte Amplitude als Schwankungshub zu betrachten.

Die Dichtwirkung wird insbesondere zwischen der dem Bandkörper zugewandten Seite an den Aussenkanten des Förderbandes und dem Bandkörper erzielt.

Das Förderband gleitet mit seinen lateralen Aussenkanten dichtend über den Bandkörper in dessen Randbereich und verhindert somit das Eindringen von pulverförmigem oder körnigem Material zwischen Bandkörper und Förderband, von wo es mitgenommen werden könnte und in die Lager der Fördebandeinrichtung gelangen könnte oder in den Antrieb und diese letztendlich beschädigen könnte.

Durch die gezielte Wahl des Abstandes der Aussenkanten des Förderbandes von den Kanten des Bandkörpers, wird erreicht, dass das Förderband in seinem Unterlauf niemals über den Bandkörper ragt und somit nicht als Aufnahme für vom Bandkörper herabfallendes Material dient.

Versuche mit der erfindungsgemässen Förderbandeinrichtung haben gezeigt, dass gegenüber einer Förderbandeinrichtung gemäss dem Stand der Technik eine enorme Verbesserung im Hinblick auf deren Ausfallsicherheit erzielt werden konnte. Bei der erfindungsgemässen Förderbandeinrichtung wurde auch während Langzeittests von mehreren Wochen beim Transport von Gebinden, die pulverförmiges oder körniges Material verlieren, kein Fördergut an der Unterseite des Förderbandes lokalisiert, was bedeutet, dass die drehenden Teile keiner Gefahr gegen Zerstörung ausgesetzt waren.

An seiner Oberseite ist der Bandkörper mit Vorzug als eine ebene Fläche ausgebildet. Ferner ist das Förderband über seine gesamte Breite bis zur jeweiligen Aussenkante mit einer weitgehend konstanten Materialdicke ausgestaltet.

In einer bevorzugten Ausführungsform der Förderbandeinrichtung ist das Förderband elastisch. Dies hat zusätzlich den Vorteil, dass die notwendige Bandspannung bereits vorgegeben ist und nicht eingestellt zu werden braucht. Ausserdem kann das Förderband nachdem auf einer Seite der jeweilige Rollenkörper von der Halterung im Bereich des Rollenlagers getrennt wurde von der Förderbandanordnung zu Reinigungszwecken entfernt werden, indem das Förderband einfach abgezogen wird.

In einer besonders vorteilhaften Ausgestaltung der Förderbandeinrichtung deckt im betriebsbereiten Zustand das Förderband sämtliche Verbindungen zwischen Förderrollen und deren Lager ab. Somit werden zusätzlich zum Vorteil, dass nahezu kein pulverförmiges oder körniges Material auf die Innenseite des Förderbandes, insbesondere wenn dieses als Endlosband ausgeformt ist, gelangen kann, auch noch sämtliche drehenden Teile vor dem Eindringen unerwünschten Materials geschützt.

Dadurch dass der Bandkörper frei von von aussen zugänglichen Öffnungen und Spalten ausgestaltet ist, bietet die Förderbandeinrichtung einen weiteren Schutz gegenüber dem Eindringen von pulverförmigem oder körnigem Material.

In bevorzugter Weiterbildung der Förderbandeinrichtung ist der Antrieb vermittels einer Abdeckung vollständig gekapselt. Insbesondere wenn die Abdeckung des Antriebs quer zur Förderrichtung bündig mit dem Bandkörper verlaufend ausgestaltet ist, sind vorstehende Teile auf ein Minimum reduziert.

Einem weiteren Erfindungsgedanken trägt die Ausgestaltung der Förderbandeinrichtung dadurch Rechnung, dass die an den in Förderrichtung und entgegen der Förderrichtung sich befindenden Enden angeordneten Förderrollen im Wesentlichen zylinderförmig sind mit einer leichten Ballung zur Zylindermitte hin. Dabei ist der Zylinderradius über die Zylinderlänge betrachtet in deren Mitte um wenige Zehntelmillimeter bis Millimeter grösser, als an den jeweiligen Enden der Förderrollen. Diese leicht ballige Ausgestaltung der an sich zylinderförmigen Förderrollen trägt wesentlich zur Zentrierung des Förderbandes bei und stabilisiert es während des Betriebs der Förderbandeinrichtung.

In einer alternativen Ausgestaltung zeichnet sich die Förderbandeinrichtung dadurch aus, dass auf beiden Längsseiten des Bandkörperseine sich über jeweils die gesamte Längsseite des Bandkörpers und einen Teil des Bandkörpers bildende Leiste vorhanden ist, welche sich in ihrer Ausdehnung quer zur Förderrichtung bis unter das Förderband erstreckt und dort bündig mit dem Rest des Bandkörpers fest verbunden ist. Dabei erstrecken sich die Leisten auch über jene Bereiche, die der Aufnahme der Förderrollen im Bandkörper dienen und weisen zur Erfüllung der Bündigkeit an den Positionen der Förderrollen eine Rundung mit einem Radius senkrecht zur Längsausdehnung der jeweiligen Förderrolle auf.

In einer weiteren vorteilhaften Ausgestaltung der Förderbandeinrichtung weisen die Leisten an ihrer Oberseite und im Bereich dieser die Förderrollen und deren Aufnahme abdeckenden Rundung eine von der Förderbandeinrichtung weg weisende konvexe Aussenwölbung auf, die zumindest entlang der Oberseite der Förderbandeinrichtung beziehungsweise der Leiste senkrecht zur Transportrichtung gekrümmt ist.

Der Bandkörper weist an seiner Oberseite eine im Wesentlichen ebene Oberfläche auf.

Mit Vorteil ist die konvexe Aussenwölbung im Bereich der Abdeckung des Antriebs nicht vorhanden, jedoch ist dort zwischen dem Motorgehäuse und der Abdeckung des Antriebs eine Motorplatte angeordnet und bündig mit dem Bandkörper bzw. der einen Teil desselben bildenden Leiste fest verbunden.

An ihrer Unterseite weist die Leiste ein rechtwinkliges Profil auf, zur Montage von Anschlussteilen.

Die Erfindung wird anhand von Beispielen, wie sie stark schematisiert in den Zeichnungen dargestellt sind, im Folgenden beschrieben. Es zeigen:
- Fig. 1: eine perspektivische Ansicht einer erfindungsgemässen Förderbandeinrichtung,
- Fig. 2: eine Ansicht der erfindungsgemässen Förderbandeinrichtung von der Seite,
- Fig. 3: eine Ansicht der erfindungsgemässen Förderbandeinrichtung entgegen der Förderrichtung in betriebsbereitem Zustand mit installiertem Förderband, wobei der Ausschnittvergrösserung 3a der Abstand d der Aussenkante des Förderbandes von der Kante des Bandkörpers entnehmbar ist,
- Fig. 4: eine Schnittdarstellung der erfindungsgemässen Förderbandeinrichtung entgegen der Förderrichtung, worin die Lagerung der Antriebsrolle zu sehen ist,
- Fig. 5: eine Schnittdarstellung der erfindungsgemässen Förderbandeinrichtung in Förderrichtung, worin die Lagerung der Laufrolle zu sehen ist
- Fig. 6: eine perspektivische Ansicht der erfindungsgemässen Förderbandeinrichtung in einer weiteren, alternativen Ausführungsform.

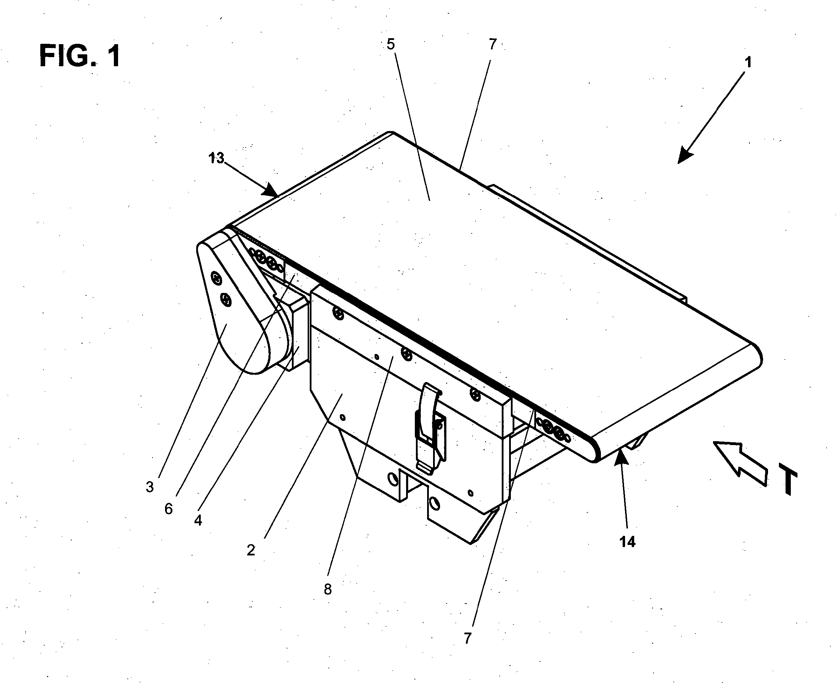

Die Figur 1 zeigt eine Förderbandeinrichtung 1, wie sie für den Transport von Waren geeignet ist, deren Verpackung ein Herausrieseln des im jeweiligen Gebinde enthaltenen pulverförmigen oder körnigen Materials nicht vollständig unterbinden können. Es handelt sich bei der in der Figur 1 gezeigten Förderbandeinrichtung um eine solche, die eine Wägezelle zum dynamischen Verwiegen der jeweiligen Gebinde enthält. Die Wägezelle ist unterhalb der Aufnahme 2 angeordnet, welche eine verschliessbare Klappe, die den Zugang zur Wägezelle ermöglicht, aufweist. Da die Wägezelle nicht Gegenstand der Erfindung ist, wird sie hier nicht weiter beschrieben. Anstelle einer Förderbandeinrichtung mit einer Wägezelle kann es sich bei einer solchen erfindungsgemässe Förderbandeinrichtung auch um eine Zufuhrbandeinrichtung, eine Abfuhrbandeinrichtung oder um eine Förderbandeinrichtung mit einer Vorrichtung zum Aussortieren von fehlerhaften Produkten oder um eine solche mit weiteren der Inspektion von Produkten dienenden Einrichtungen, beispielsweise einer Einrichtung zur Detektion von Verunreinigungen in den Produkten und dergleichen mehr handeln.

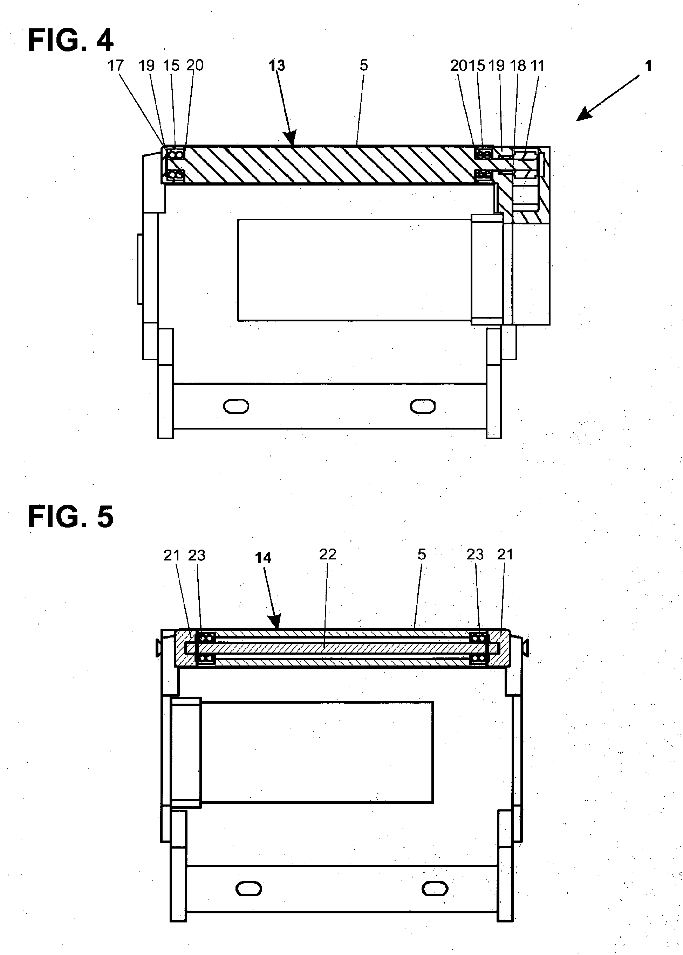

Die Förderbandeinrichtung 1 weist einen Antrieb auf, der vermittels einer Abdeckung 3 vollständig gekapselt ist und einerseits mit einem im Gehäuse 4 angeordneten Motor verbunden ist, und andererseits mit einer am Ende der Förderbandeinrichtung 1 sich befindenden Förderrolle, namentlich der Antriebsrolle 13. Die Antriebsrolle 13 ist in der Figur 1 vom Förderband 5 vollständig abgedeckt, insbesondere auch in den Bereichen der Rollenlager beziehungsweise deren Verbindung mit dem Antrieb. Dies ist im Detail weiter unten anhand der Figur 4 näher erläutert.

Beim Förderband 5 handelt es sich um ein elastisches Band, das über den Bandkörper 6 und die Förderrollen als sogenanntes Endlosband gespannt ist. Das Förderband 5 ist demnach als ein flaches Band ausgestaltet, weist also eine weitgehend homogene Dicke über seine gesamte Breite und Länge auf. Für die hier gezeigte Anordnung ist keine Vorrichtung zur Einstellung der Bandspannung vorgesehen, sondern die Elastizität des Förderbandes 5 ist ausreichend, um selbiges auf die Förderbandeinrichtung 1 aufzubringen und von dieser wieder, beispielsweise zu Reinigungszwecken, abzunehmen.

Der Bandkörper 6 ist im Bereich seiner Oberseite im Wesentlichen als eine ebene Fläche ausgestaltet.

Durch die Verwendung eines elastischen Förderbandes 5 ist die notwendige Bandspannung bereits vorgegeben. Ferner ist das Förderband 5 im betriebsbereiten Zustand selbstzentrierend, was ausserdem durch eine leicht ballige Form der jeweiligen Förderrollen, das heisst der Antriebsrolle 13 und der Laufrolle 14, unterstützt wird. Daher entfällt das aufwändige Einstellen der Förderbandspannung ebenso wie eine Schrägstellungskorrektur. Es sei jedoch darauf hingewiesen, dass eine Förderbandeinrichtung 1, die zusätzlich eine Vorrichtung zum Einstellen der Förderbandspannung und Schrägstellungskorrektur aufweist, ebenfalls vom Gedanken der Erfindung umfasst wird.

Das Förderband 5 ist nun derart auf dem Bandkörper 6 angeordnet und über den Bandkörper 6 sowie die Förderrollen, namentlich die Antriebsrolle 13 und die Laufrolle 14 gespannt, dass zwischen den Aussenkanten 7 des Förderbandes 5 und dem Bandkörper 6 eine Dichtwirkung erzielt wird. Dies bedeutet, dass das Förderband 5 im laufenden Betrieb über den Bandkörper 6 gleitet und mit seinen jeweiligen Aussenkanten 7, insbesondere der dem Bandkörper 6 zugewandten Seite an den Aussenkanten 7 des Förderbandes 5, stets den Bandkörper 6 berührt. Mithin wird verhindert, dass Pulver oder feinkörniges Material zwischen Bandkörper 6 und Förderband 5 gerät und eventuell zerrieben wird und/oder an der Innenseite des Förderbandes 5, das heisst der stets der zu transportierenden Ware abgewandten Förderbandseite bzw. -oberfläche, zu haften kommt und auf diese Weise weitertransportiert wird, somit gegebenenfalls in den Antrieb oder die Rollenlager gelangen könnte.

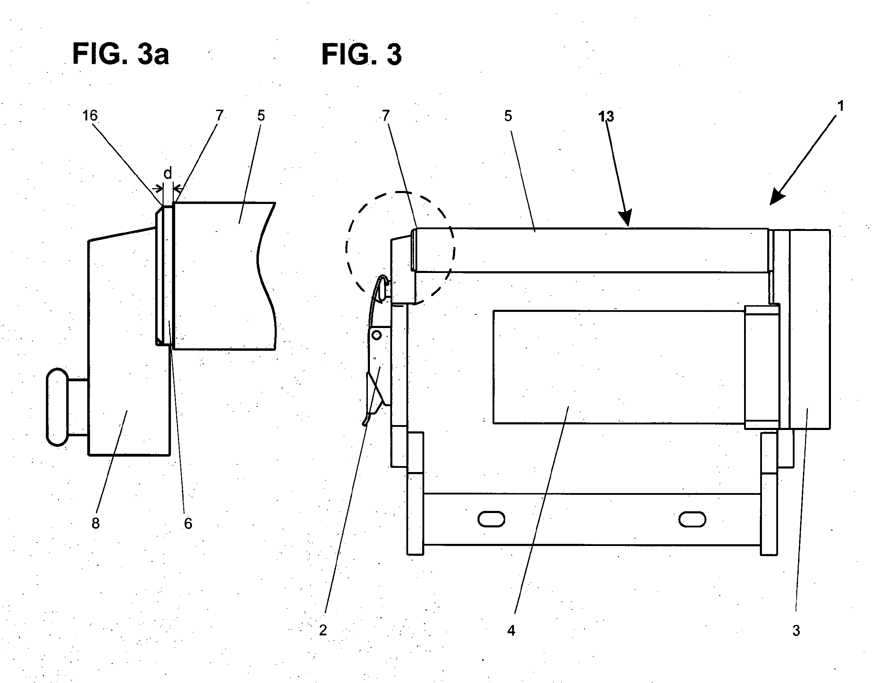

Im Betrieb einer Förderbandeinrichtung ist es unumgänglich, dass das Förderband geringfügigen, jedoch messbaren, lateralen Schwankungen - sogenannten Gurtschwankungen - unterworfen ist. Um zu verhindern, dass nun das Förderband 5, wenn auch nur kurzzeitig, in seinem Unterlauf, d.h. wenn es unterhalb des Bandkörpers 6 verläuft, mit einem geringfügigen Teil über den Rand des Bandkörpers 6 hinausragt und daher eventuell auf dem Bandkörper 6 befindliches Pulver oder körniges Material von diesem auf einen eventuell zeitweilig überstehenden unterhalb des Bandkörpers 6 befindlichen Teil des Förderbandes 5, das heisst die Innenseite des Förderbandes 5, fallen könnte, ist vorgesehen, die Aussenkante 7 um einen Abstand d von der Kante 16 des Bandkörpers 6 entfernt zu halten. Dieser Abstand d entspricht mindestens einer doppelten Amplitude einer lateralen Schwankung des Förderbandes 5 und damit dem Schwankungshub (siehe auch Figur 3a).

Gurtschwankungen oder ein sogenannter Taumelschlag haben ihre Ursache in fertigungsbedingten Toleranzen bei der Herstellung des Transportbandes und betragen wenige Millimeter.

In der Figur 1 ist ausserdem erkennbar, dass weder der Bandkörper 6 noch weitere Teile der Förderbandeinrichtung 1 Spalte oder Öffnungen aufweisen, in welche Pulver oder körniges Material eindringen könnte.

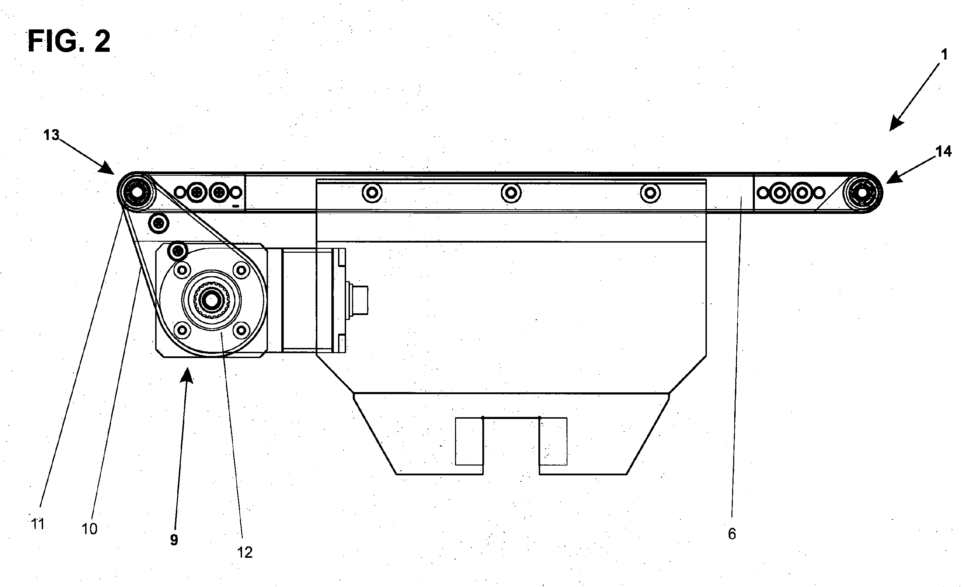

In der Figur 2 ist die Förderbandeinrichtung von der Seite zu sehen. Die Abdeckung 3 des Antriebs 9 ist abgenommen, so dass dieser erkennbar ist. Die Antriebsrolle 13 ist über einen Riemenantrieb mit zwei Antriebsrädern 11, 12 und einem Antriebsriemen 10 mit dem Motor verbunden. Dabei wird das Antriebsrad 11 häufig auch als getriebenes Rad bezeichnet. Der Motor ist unterhalb des Bandkörpers 6 platziert. Beim Riemenantrieb kann es sich um einen solchen mit Zahnriemen, Keilriemen und dergleichen mehr handeln. Gelangt Pulver oder körniges Material in den Antrieb 9 - hier zum Beispiel ein Zahnriemenantrieb - so setzt sich dieses bevorzugt in die Vertiefungen der Antriebsräder 11, 12 - hier Zahnräder - ab und verdichtet sich dort. Dies führt in den Vertiefungen zu einem Materialaufbau und dadurch zu einer Abstandsvergrösserung des Zahnriemens in Bezug auf die Zahnräder, was den Zahnriemen einer höheren Spannung und entsprechenden Dehnung aussetzt, und letztendlich zu dessen Reissen führt. Dies wird durch die erfindungsgemässe Förderbandeinrichtung 1 verhindert.

Am gegenüberliegenden Ende der Förderbandeinrichtung 1, das heisst an dem dem Antrieb 9 abgewandten Ende der Förderstrecke, ist die Laufrolle 14 in der Figur 2 zu sehen.

Die Figur 3 zeigt eine Ansicht der erfindungsgemässen Förderbandeinrichtung 1 entgegen der Förderrichtung T in betriebsbereitem Zustand mit installiertem Förderband 5. Neben dem Gehäuse 4 des Motors ist auf der rechten Seite der Darstellung die Abdeckung des Antriebs 3 erkennbar. Ferner ist links die Aufnahme 2 mit Klappe erkennbar, mittels welcher Bereiche unterhalb des Förderbandes 5 zugänglich sind, beispielsweise eine im Inneren der Förderbandeinrichtung 1 angeordnete Wägezelle (hier nicht sichtbar).

Wie der Figur 3a, die eine Ausschnittvergrösserung des eingekreisten Bereichs der Figur 3 darstellt, entnehmbar ist, ist die Aussenkante 7 des Förderbandes 5 einen gewissen Abstand d von der Kante 16 des Bandkörpers 6 entfernt, so dass in der Figur 3a noch ein Stück des Bandkörpers 6 sichtbar ist. Dieser Abstand d der Aussenkante 7 des Förderbandes 5 von der Kante 16 des Bandkörpers 6 ist so bemessen, dass laterale Schwankungen des Förderbandes 5 - sogenannte Gurtschwankungen - nicht dazu führen, dass das Förderband 5 über den Bandkörper 6 hinausragen könnte. Mit dieser Massnahme, namentlich, dass der Abstand d grösser oder gleich dem maximalen Schwankungshub einer Gurtschwankung bzw. lateralen Schwankung des Förderbandes gewählt ist, wird jegliches Überstehen des Förderbandes 5 über den Bandkörper 6 verhindert. Somit wird vermieden, dass pulverförmiges oder körniges Material vom Förderband 5 auf eventuell an der Unterseite des Bandkörpers 6 überstehende Bereiche des Förderbandes 5 auf dessen Innenseite fallen könnte. Gleichzeitig gleitet die Aussenkante 7 des Förderbandes 5, insbesondere deren dem Bandkörper 6 zugewandte Seite, über den Bandkörper 6 und bildet mit diesem zusammen eine Dichtung. Es kann also kein Material zwischen Bandkörper 6 und Förderband 5 eindringen.

Wie aus der Figur 3 ebenfalls erkennbar überdeckt das Förderband 5 die Antriebsrolle 13 vollständig, indem die Breite des Förderbandes 5 grösser gewählt ist, als die Länge der Antriebsrolle 13. Ferner sind jegliche weiteren drehbaren Teile der Förderbandeinrichtung 1 abgedeckt oder befinden sich in einem Gehäuse.

Die Figur 4 zeigt eine Schnittansicht der erfindungsgemässen Förderbandeinrichtung 1 entgegen Förderrichtung T, mit installiertem Förderband 5. Die Antriebsrolle 13 weist an ihren beiden Enden jeweils einen Zapfen 17, 18 auf. Die Zapfen 17, 18 sind vermittels der Antriebsrollenlager 15, die in einer Rollenaufnahme 19 im Bandkörper 6 aufgenommen sind, drehbar gelagert. Der Zapfen 18 ist gegenüber dem Zapfen 17 verlängert und mit dem Antriebsrad 11 fest im Eingriff. Im betriebsbereiten Zustand ist der Spalt 20, der zwangsläufig zwischen Antriebsrolle 13 und der Rollenaufnahme 19 vorhanden ist, durch das Förderband 5 abgedeckt.

In der Figur 4, wie auch in der nachfolgenden Figur 5 ist deutlich zu sehen, dass das Förderband 5 über seine gesamte Breite bis zu seiner Aussenkante 7 mit einer weitgehend konstanten Materialdicke ausgestaltet ist, also überall eine homogene Dicke aufweist. Zum Reinigen kann das Förderband 5 abgenommen werden, wobei einseitig im Bereich des Antriebsrollenlagers 15 die Antriebsrolle 13 von der Rollenaufnahme 19 getrennt wird, wonach das elastische Förderband 5 einfach abgezogen werden kann.

Die Figur 5 zeigt eine Schnittansicht der erfindungsgemässen Förderbandeinrichtung 1 in Förderrichtung T, mit installiertem Förderband 5. Die Laufrolle 14 ist beidseitig in einem mit dem Bandkörper 6 verbundenen Rollenhalter 21 gelagert. Der Rollenhalter 21 nimmt die hier durch den gesamten Rollenkörper hindurchreichende Achse 22 auf, wobei die Laufrolle 14 um die Achse 22 vermittels der Laufrollenlager 23 drehbar gelagert ist. Auch hier gilt, dass die Breite des Förderbandes 5 ist grösser gewählt ist, als die Länge der Laufrolle 14.

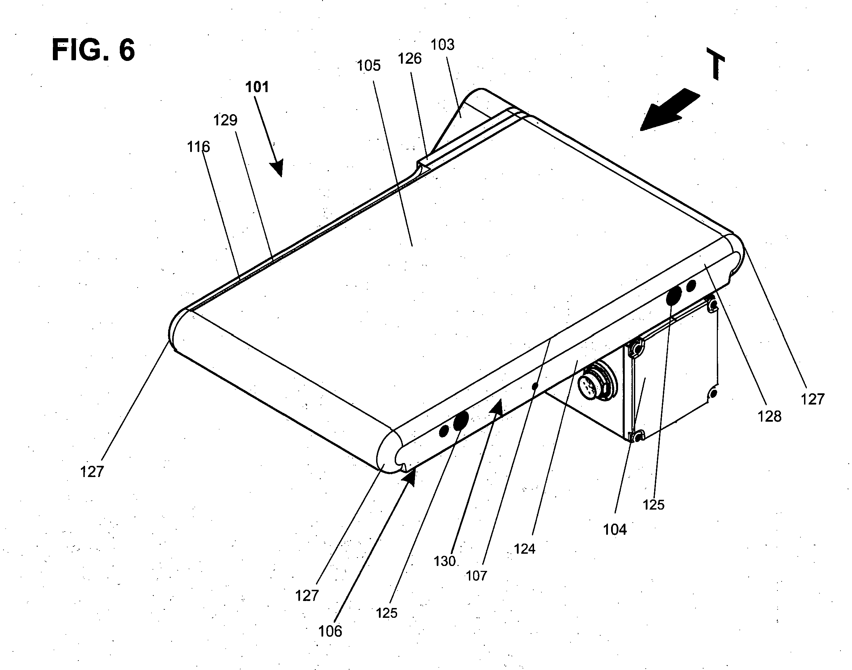

In der Figur 6 ist eine weitere Ausführungsform der Förderbandeinrichtung 101 zu sehen. Die beiden Längsseiten 130 des an seiner Oberseite im Wesentlichen ebenen Bandkörpers sind durch eine Leiste 124 abgedeckt. Diese Leiste 124 erstreckt sich in ihrer Ausdehnung quer zur Förderrichtung bis unter das Förderband 105 und ist dort bündig mit dem Rest des Bandkörpers 106 vermittels der Schrauben 125 verschraubt. Die Leiste 124 erstreckt sich jeweils über die gesamte Längsseite 130 des Bandkörpers 106 und bildet einen Teil des Bandkörpers 106. Somit erstrecken sich beide Leisten 124 auch über jene Bereiche, die der Aufnahme der Förderrollen im Bandkörper 106 dienen und sind zur Erfüllung der Bündigkeit an den Positionen der Förderrollen entsprechend mit einem Radius senkrecht zur Längsausdehnung der jeweiligen Förderrolle (beide sind in der Figur 6 nicht zu sehen, da verdeckt) abgerundet, d.h. weisen eine Rundung 127 auf.

An ihrer Oberseite und im Bereich dieser die Förderrollen und deren Aufnahme abdeckenden abgerundeten Bereiche weist die jeweilige Leiste eine von der Förderbandeinrichtung 101 weg weisende konvexe Aussenwölbung 128, die zumindest entlang der Oberseite der Förderbandeinrichtung 101 beziehungsweise der Leiste 124 senkrecht zur Transportrichtung T gekrümmt ist, auf. Diese konvexe Aussenwölbung 128 dient einerseits einem verbesserten ästhetischen Erscheinungsbild der Förderbandanlage 101 und andererseits der Schmutzabweisung in dem Sinne, dass vom Förderband 105 herabfallende pulverförmige oder feinkörnige Güter von der Förderbandanlage nach aussen weggelenkt werden. Die konvexe Aussenwölbung 128 geht an der Oberseite der Leiste 124 in einen ebenen Bereich 129 über, der, wie bereits erwähnt, unterhalb des Förderbandes 105 bündig mit dem Rest des Bandkörpers 106 verbunden ist. Das Förderband 105 ist nun derart auf dem Bandkörper 106 angeordnet und über den Bandkörper 106 sowie die Förderrollen, gespannt, dass zwischen den Aussenkanten 107, insbesondere der dem Bandkörper 106 zugewandten Seite an den Aussenkanten 107 des Förderbandes 105 und dem ebenen Bereich 129 der Leiste 124 des Bandkörpers 106 eine Dichtwirkung erzielt wird.

Der Abstand zwischen der jeweiligen Aussenkante 107 des Förderbandes 105 und der Position des Übergangs der konvexen Aussenwölbung 128 in den ebenen Bereich 129 entspricht jenem in der Figur 3a gezeigten Bereich, für welchen gilt, dass die Aussenkanten des Förderbandes mindestens einen einem maximalen Schwankungshub einer lateralen Förderbandschwankung entsprechenden Abstand d jeweils von den Kanten des Bandkörpers entfernt sind.

Der Begriff der Kante des Bandkörpers ist in dieser Ausführungsform demnach als der Beginn der Krümmung der konvexen Aussenwölbung 128 zu verstehen. Der Abstand d entspricht demnach dem Abstand zwischen der Aussenkanten 107 des Förderbandes 105 und dem Beginn der Krümmung der konvexen Aussenwölbung 128.

An der Unterseite weist die Leiste ein rechtwinkliges Profil auf, was die Montage von Anschlussteilen erleichtert.

Im Bereich der Abdeckung des Antriebs 103 wird auf die konvexe Aussenwölbung 128 verzichtet, da dort zwischen dem Motorgehäuse 104 und der Abdeckung des Antriebs 103 eine Motorplatte 126 angeordnet und bündig mit dem Bandkörper 106 bzw. der einen Teil desselben bildenden Leiste 124 fest verbunden ist. Auf diese Weise ist das Motorgehäuse 104 abgedichtet und es wird vermieden, dass vom Förderband 105 herabfallende pulverförmige oder feinkörnige Güter in das Motorgehäuse oder innerhalb der Abdeckung des Antriebs 103 gelangen könnten.

Die Erfindung wurde anhand der in den Figuren dargestellten Ausführungsbeispiele gezeigt und beschrieben. Es versteht sich von selbst, dass weitere hier nicht beschriebene Ausführungsformen der Vorrichtung dem Wesen der Erfindung gerecht werden.

### Bezugszeichenliste

- 1, 101: Förderbandeinrichtung
- 2: Aufnahme
- 3, 103: Abdeckung des Antriebs
- 4, 104: Gehäuse des Motors
- 5, 105: Förderband
- 6, 106: Bandkörper
- 7, 107: Aussenkante des Förderbandes
- 8: Blende
- 9: Antrieb
- 10: Antriebsriemen
- 11: Antriebsrad
- 12: Antriebsrad
- 13: Antriebsrolle
- 14: Laufrolle
- 15: Antriebsrollenlager
- 16, 116: Kante des Bandkörpers
- 17: Zapfen der Antriebsrolle
- 18: Zapfen der Antriebsrolle
- 19: Rollenaufnahme im Bandkörper
- 20: Spalt
- 21: Rollenhalter
- 22: Achse
- 23: Laufrollenlager
- 124: Leiste
- 125: Schrauben
- 126: Motorplatte
- 127: Rundung
- 128: konvexe Aussenwölbung
- 129: ebener Bereich an der Oberseite der Leiste
- 130: Längsseite des Bandkörpers
- d: Abstand Aussenkante des Förderbandes von der Kante des Bandkörpers
- T: Förderrichtung

## Patentansprüche

1. Förderbandeinrichtung (1, 101) mit einem Bandkörper (6, 106), an welchem an den in Förderrichtung (T) und entgegen der Förderrichtung (T) sich befindenden Enden jeweils eine Förderrolle (13, 14) angeordnet ist und der in seiner Richtung senkrecht zur Förderrichtung (T) durch Kanten (16, 116) begrenzt ist, und mit einem über den Bandkörper (6, 106) und die Förderrollen (13, 14) beweglich angeordneten Förderband (5, 105), welches Förderband beidseitig durch Aussenkanten (7, 107) begrenzt ist, wobei das Förderband (5, 105) derart angeordnet und über den Bandkörper (6, 106) und über die Förderrollen (13, 14) gespannt ist, dass zwischen den Aussenkanten (7, 107) des Förderbandes (5, 105) und dem Bandkörper (6, 106) eine Dichtwirkung erzielt wird, **dadurch gekennzeichnet, dass** die Aussenkanten (7,107) des Förderbandes (5, 105) mindestens einen einem maximalen Schwankungshub einer lateralen Förderbandschwankung entsprechenden Abstand (d) jeweils von den Kanten (16, 116) des Bandkörpers (6) entfernt sind.

2. Förderbandeinrichtung nach Anspruch 1, **dadurch gekennzeichnet, dass** das Förderband (5, 105) über seine gesamte Breite bis zur jeweiligen Aussenkante (7, 107) mit einer weitgehend konstanten Materialdicke ausgestaltet ist.

3. Förderbandeinrichtung nach Anspruch 1 oder 2, **dadurch gekennzeichnet, dass** die Dichtwirkung zwischen der dem Bandkörper (6, 106) zugewandten Seite an den Aussenkanten (7, 107) des Förderbandes (5, 105) und dem Bandkörper (6, 106) erzielt wird.

4. Förderbandeinrichtung nach Anspruch 1, 2 oder 3, **dadurch gekennzeichnet, dass** das Förderband (5, 105) elastisch ist.

5. Förderbandeinrichtung nach einem der Ansprüche 1 bis 4, **dadurch gekennzeichnet, dass** die Förderrollen (13, 14) mit dem Bandkörper (6) über Lager (15, 23), verbunden sind und im betriebsbereiten Zustand des Förderbandes (5) dieses in Bezug auf die Förderrollen (13, 14) sämtliche Verbindungen zwischen den Förderrollen (13, 14) und deren Lager (15, 23) abdeckend angeordnet ist.

6. Förderbandeinrichtung nach einem der Ansprüche 1 bis 5, **dadurch gekennzeichnet, dass** der Bandkörper (6, 106) frei von von aussen zugänglichen Öffnungen und Spalten ausgestaltet ist.

7. Förderbandeinrichtung nach einem der Ansprüche 1 bis 6, **dadurch gekennzeichnet, dass** diese einen Antrieb (9) aufweist und der Antrieb (9) vermittels einer Abdeckung (3, 103) vollständig gekapselt ist.

8. Förderbandeinrichtung nach Anspruch 7, **dadurch gekennzeichnet, dass** die Abdeckung (3) des Antriebs (9) quer zur Förderrichtung (T) bündig mit dem Bandkörper (6) verlaufend ausgestaltet ist.

9. Förderbandeinrichtung nach einem der Ansprüche 1 bis 8, **dadurch gekennzeichnet, dass** die an den in Förderrichtung (T) und entgegen der Förderrichtung (T) sich befindenden Enden angeordneten Förderrollen (13, 14) im Wesentlichen zylinderförmig sind, die jeweils zur Zylindermitte hin leicht ballig ausgeformt sind.

10. Förderbandeinrichtung nach einem der Ansprüche 1 bis 9, **dadurch gekennzeichnet, dass** auf beiden Längsseiten (130) des Bandkörpers (106) eine sich über jeweils die gesamte Längsseite (130) des Bandkörpers (106) und einen Teil des Bandkörpers (106) bildende Leiste (124) vorhanden ist, welche sich in ihrer Ausdehnung quer zur Förderrichtung (T) bis unter das Förderband (105) erstreckt und dort bündig mit dem Rest des Bandkörpers (106) fest verbunden ist.

11. Förderbandeinrichtung nach Anspruch 10, **dadurch gekennzeichnet, dass** die Leisten (124) sich auch über jene Bereiche, die der Aufnahme der Förderrollen im Bandkörper (106) dienen, erstrecken und zur Erfüllung der Bündigkeit an den Positionen der Förderrollen eine Rundung (127) mit einem Radius senkrecht zur Längsausdehnung der jeweiligen Förderrolle aufweisen.

12. Förderbandeinrichtung nach Anspruch 11, **dadurch gekennzeichnet, dass** die Leisten (124) an ihrer Oberseite und im Bereich dieser die Förderrollen und deren Aufnahme abdeckenden Rundung (127) eine von der Förderbandeinrichtung (101) weg weisende konvexe Aussenwölbung (128) aufweisen, die zumindest entlang der Oberseite der Förderbandeinrichtung (101) beziehungsweise der Leiste (124) senkrecht zur Transportrichtung (T) gekrümmt ist.

13. Förderbandeinrichtung nach Anspruch 7 und 12, **dadurch gekennzeichnet, dass** im Bereich der Abdeckung des Antriebs( 103) die konvexe Aussenwölbung (128) nicht vorhanden ist und dort zwischen dem Motorgehäuse (104) und der Abdeckung des Antriebs (103) eine Motorplatte (126) angeordnet und bündig mit dem Bandkörper (106) bzw. der einen Teil desselben bildenden Leiste (124) fest verbunden ist.

14. Förderbandeinrichtung nach einem der Ansprüche 11 bis 13, **dadurch gekennzeichnet, dass** die Leiste (124) an ihrer Unterseite ein rechtwinkliges Profil auf weist, zur Montage von Anschlussteilen.

15. Förderbandeinrichtung nach einem der Ansprüche 1 bis 14, **dadurch gekennzeichnet, dass** diese ein Zufuhrband und/oder ein Abfuhrband und/oder eine Einrichtung zum dynamischen Verwiegen von Produkten und/oder eine Einrichtung zur Inspektion von Produkten, insbesondere zur Detektion von Verunreinigungen in den jeweiligen Produkten umfasst.

## Claims

1. Belt conveyor (1, 101), comprising a conveyor bed (6, 106), on which belt rollers (13, 14) are arranged, respectively, at both the leading end and the trailing end relative to the transport direction T, and which in the direction transverse to said transport direction T is delimited by edges (16, 116), and further comprising a conveyor belt (5, 105) which is arranged to be movable over the conveyor bed (6, 106) and around the belt rollers (13, 14) and which is delimited along both sides by outside borders (7, 107),wherein the conveyor belt (5, 105) is arranged and pulled tight over the conveyor bed (6, 106) and the belt rollers (13, 14) in such a way that a sealing effect is achieved between the outside borders (7, 107) of the conveyor belt (5, 105) and the conveyor bed (6, 106), **characterized in that** the outside borders (7, 107) of the conveyor belt (5, 105) are set back from the edges (16, 116) of the conveyor bed (6) by a distance (d) equal to at least the maximum sweep of a lateral variation in the movement of the conveyor belt.

2. Belt conveyor according to claim 1, **characterized in that** the conveyor belt (5, 105) is designed with a largely uniform material thickness over its entire width, out to each border (7, 107).

3. Belt conveyor according to claim 1 or 2, **characterized in that** the sealing effect is achieved along the outside borders (7, 107) of the conveyor belt (5, 105) between the conveyor bed (6, 106) and the side of the conveyor belt (5, 105) that faces towards the conveyor bed (6, 106).

4. Belt conveyor according to claim 1, 2 or 3, **characterized in that** the conveyor belt (5, 105) is elastic.

5. Belt conveyor according to one of the claims 1 to 4, **characterized in that** the belt rollers (13, 14) are connected to the conveyor bed (6) by way of bearings (15, 23) and that the conveyor belt (5) in its operational state is arranged so as to cover all connections between the belt rollers (13, 14) and their bearings (15, 23).

6. Belt conveyor according to one of the claims 1 to 5, **characterized in that** the conveyor bed (6, 106) is designed to be free of openings or gaps accessible from the outside.

7. Belt conveyor according to one of the claims 1 to 6, **characterized in that** the belt conveyor comprises a drive mechanism (9) and that said drive mechanism (9) is completely encapsulated by an enclosure (3, 103).

8. Belt conveyor according to claim 7, **characterized in that** the enclosure (3) of the drive mechanism (9) is designed to join the conveyor bed (6) in a flush transition transverse to the transport direction (T).

9. Belt conveyor according to one of the claims 1 to 8, **characterized in that** the belt rollers (13, 14) at the leading end and the trailing end relative to the transport direction (T) are of a basically cylindrical shape, but slightly crowned towards the middle.

10. Belt conveyor according to one of the claims 1 to 9, **characterized in that** the belt conveyor (101) comprises side panels (124) which are arranged on both lengthwise sidewalls (130) of the conveyor bed (106), extending over the entire length of the conveyor bed (106) and forming a part of the conveyor bed (106), and that said side panels (124), relative to their widths transverse to the transport direction (T) extend to a level just below the conveyor belt (105), where each side panel (124) forms a flush joint with, and is solidly connected to, the rest of the conveyor bed (106).

11. Belt conveyor according to claim 10, **characterized in that** the side panels (124) also extend over the areas where the belt rollers are mounted in the conveyor bed (106) and that, in order to continue said flush joints also in the area of the belt rollers, the side panels have rounded end portions (127) with a radius perpendicular to the longitudinal axis of the respective belt roller.

12. Belt conveyor according to claim 11, **characterized in that** the side panels (124) comprise a convex-rounded outside border zone (128) along their top borders as well as along their rounded end portions (127) covering the belt rollers and their mounting supports, wherein the convex curvature of said rounded border zone (128) faces away from the belt conveyor and the curvature radius of the rounded border zone (128) at least along the topside of the belt conveyor (101) and of the side panels (124) is directed perpendicular to the transport direction (T).

13. Belt conveyor according to claim 7 and 12, **characterized in that** the rounded border zone (128) is not continued into the area of the enclosure (103) of the drive mechanism, that in said area of the enclosure (103) a motor mount plate (126) is arranged between the motor housing (104) and the enclosure (103) of the drive mechanism, and that said motor mount plate (126) is solidly connected to, and in flush alignment with, the conveyor bed (106) or the side panel (124) that forms part of the conveyor bed.

14. Belt conveyor according to one of the claims 11 to 13, **characterized in that** the side panel (124) has at its underside a rectangular profile, which facilitates the mounting of connecting parts.

15. Belt conveyor according to one of the claims 1 to 14, **characterized in that** the belt conveyor comprises an infeed conveyor and/or an outfeed conveyor and/or a device for the dynamic weighing of products and/or a device for the inspection of products, in particular for the detection of contaminants in the inspected products.

## Revendications

1. Système de bande transporteuse (1, 101) avec un corps de bande (6, 106) sur lequel est agencé un rouleau de transport (13, 14), respectivement aux extrémités situées dans la direction de transport (T) et contre la direction de transport (T), et lequel est délimité par des bords (16, 116) dans sa direction perpendiculaire à la direction de transport (T), et avec une bande transporteuse (5, 105) agencée de façon à pouvoir se déplacer par le biais du corps de bande (6, 106) et des rouleaux de transport (13, 14), ladite bande transporteuse (5, 105) étant délimitée de part et d'autre par des bords extérieurs (7, 107), dans lequel la bande transporteuse (5, 105) est agencée et tendue par le corps de bande (6, 106) et les rouleaux de transport (13, 14) de manière à créer un effet d'étanchéité entre les bords extérieurs (7, 107) de la bande transporteuse (5, 105) et le corps de bande (6, 106), **caractérisé en ce que** les bords extérieurs (7, 107) de la bande transporteuse (5, 105) sont respectivement espacés des bords (16, 116) du corps de bande (6) selon un écart (d) correspondant au moins à une amplitude de variation maximale d'une variation latérale de la bande transporteuse.

2. Système de bande transporteuse selon la revendication 1, **caractérisé en ce que** la bande transporteuse (5, 105) est conçue avec une épaisseur de matériau quasiment constante sur l'ensemble de sa largeur, jusqu'au bord extérieur (7, 107) respectif.

3. Système de bande transporteuse selon la revendication 1 ou 2, **caractérisé en ce que** l'effet d'étanchéité entre le côté tourné vers le corps de bande (6, 106) est créé sur les bords extérieurs (7, 107) de la bande transporteuse (5, 105) et le corps de bande (6, 106).

4. Système de bande transporteuse selon la revendication 1, 2 ou 3, **caractérisé en ce que** la bande transporteuse (5, 105) est élastique.

5. Système de bande transporteuse selon l'une des revendications 1 à 4, **caractérisé en ce que** les rouleaux de transport (13, 14) sont reliés au corps de bande (6) par des paliers (15, 23) et, dans l'état prêt à l'usage de la bande transporteuse (5), celle-ci est agencée par rapport aux rouleaux de transport (13, 14) de manière à couvrir toutes les liaisons entre les rouleaux de transport (13, 14) et leurs paliers (15, 23).

6. Système de bande transporteuse selon l'une des revendications 1 à 5, **caractérisé en ce que** le corps de bande (6, 106) est conçu dépourvu d'ouvertures et de fentes accessibles depuis l'extérieur.

7. Système de bande transporteuse selon l'une des revendications 1 à 6, **caractérisé en ce que** celui-ci comporte un entraînement (9), et l'entraînement (9) est entièrement blindé au moyen d'un cache (3, 103).

8. Système de bande transporteuse selon la revendication 7, **caractérisé en ce que** le cache (3) de l'entraînement (9) est conçu de manière à s'étendre perpendiculairement à la direction de transport (T), en affleurement avec le corps de bande (6).

9. Système de bande transporteuse selon l'une des revendications 1 à 8, **caractérisé en ce que** les rouleaux de transport (13, 14) agencés aux extrémités situées dans la direction de transport (T) et contre la direction de transport (T) sont essentiellement cylindriques et formés de manière légèrement bombée vers le centre du cylindre.

10. Système de bande transporteuse selon l'une des revendications 1 à 9, **caractérisé en ce que** sur les deux côtés longitudinaux (130) du corps de bande (106), il est prévu une baguette (124) s'étendant respectivement sur l'ensemble du côté longitudinal (130) du corps de bande (106) et formant une partie du corps de bande (106), laquelle s'étend perpendiculairement à la direction de transport (T) dans son extension, jusqu'en dessous de la bande transporteuse (105), où elle est reliée fermement en affleurement avec le reste du corps de bande (106).

11. Système de bande transporteuse selon la revendication 10, **caractérisé en ce que** les baguettes (124) s'étendent également sur les régions servant à la réception des rouleaux de transport dans le corps de bande (106), et comportent un arrondi (127) avec un rayon perpendiculaire à l'extension longitudinale du rouleau de transport respectif, pour créer l'affleurement au niveau des positions des rouleaux de transport.

12. Système de bande transporteuse selon la revendication 11, **caractérisé en ce que** sur leur face supérieure et dans la région de cet arrondi (127) couvrant les rouleaux de transport et leur admission, les baguettes (124) comporte une voûte extérieure convexe (128) orientée à l'opposé du système de bande transporteuse (101), laquelle est courbée perpendiculairement à la direction de transport (T), au moins le long de la face supérieure du système de bande transporteuse (101) ou de la baguette (124).

13. Système de bande transporteuse selon les revendications 7 et 12, **caractérisé en ce que** dans la région du cache de l'entraînement (103), la voûte extérieure convexe (128) est absente, et une plaque de moteur (126) est agencée à cet endroit, entre le boîtier de moteur (104) et le cache de l'entraînement (103), laquelle est reliée fermement en affleurement avec le corps de bande (106) ou la baguette (124) formant une partie de celui-ci.

14. Système de bande transporteuse selon l'une des revendications 11 à 13, **caractérisé en ce que** sur sa face inférieure, la baguette (124) présente un profilé à angle droit pour le montage de pièces de raccordement.

15. Système de bande transporteuse selon l'une des revendications 1 à 14, **caractérisé en ce que** comprend une bande d'alimentation et/ou une bande d'évacuation et/ou un dispositif pour l'inspection de produits, en particulier pour la détection d'impuretés dans les différents produits.
